# EUROPÄISCHE PATENTSCHRIFT

(11) **EP 2 404 510 B1**
(45) Veröffentlichungstag und Bekanntmachung des Hinweises auf die Patenterteilung: **27.06.2012**
(21) Anmeldenummer: 11161883.1
(22) Anmeldetag: 11.04.2011
(51) Int. Cl.: A23L 3/16, A23L 3/18, A23L 3/22, A47J 27/00

(54) **Vorrichtung zum Temperieren**
Device for tempering
Dispositif de thermorégulation

(30) Priorität: 07.07.2010 DE 102010031047
(43) Veröffentlichungstag der Anmeldung: 11.01.2012
(73) Patentinhaber: Krones AG, 93073 Neutraubling (DE)
(72) Erfinder: Runge, Torsten, 94315 Straubing (DE)
(74) Vertreter: Grünecker, Kinkeldey, Stockmair & Schwanhäusser

(56) Entgegenhaltungen:
- EP-A1- 1 281 327
- DE-A1- 3 930 934
- DATABASE FSTA [Online] INTERNATIONAL FOOD INFORMATION SERVICE (IFIS), FRANkFURT-MAIN, DE; LAFUENTE B ET AL: "In-drum thermal sterilisation of halved peaches.", XP002663444, Database accession no. FS-1986-08-J-0099

## Beschreibung

Die Erfindung bezieht sich auf eine Vorrichtung zum Temperieren einer Mischung aus einer festen und einer flüssigen Phase, insbesondere eine Fruchtpartikel enthaltende Flüssigkeit.

Eine aus der DE 39 30 934 A1 bekannte Vorrichtung enthält einen über seine Wandung beheizten Behälter, in den die zu verarbeitenden Produktanteile, also beispielsweise Fruchtpartikel und Saft, aber auch Wasser, Zucker, Pulver oder dgl. eingebracht werden. Die Unterseite des Behälters ist mit einem Auslauf einer Kreislaufleitung versehen, die über einen Wärmetauscher zurück in den oberen Bereich des Behälters führt. Der Behälter ist ebenfalls beheizt. Im Inneren des Behälters dreht sich ein Rührwerk, das gegen stationäre Arme arbeitet, die sich von der Behälterinnenwandung nach innen in Richtung auf das Rührwerk erstrecken. Das Rührwerk wird derart betrieben, dass eine Schwerkraftseparation stattfindet, wobei sich die flüssige Phase eher am Boden des Behälters ansammelt und die Festbestandteile aufschwimmen. Dadurch wird aus dem Boden des Behälters überwiegend die flüssige Phase abgezogen und über eine Pumpe in den Wärmetauscher geschickt, der die flüssige Phase weiter erwärmt. Anschließend gelangt die erwärmte Flüssigkeit wieder in den Behälter und läuft von oben auf die aufschwimmenden Fruchtpartikel, wodurch diese ebenfalls erwärmt werden.

Sowohl Rührwerke als auch eine direkte Beheizung an der Behälterwandung stellen jedoch für besonders empfindliche Produkte eine hohe Belastung dar, die sich qualitätsverschlechternd auswirkt.

Die EP 1 281 327 beschreibt eine Vorrichtung zum Erhitzen, Kochen und Sterilisieren von stückigen Lebensmitteln. Die Vorrichtung enthält einen Druckofen, in dem über eine Befüllöffnung gelochte Stapeltabletts eingefahren werden können, in denen das stückige Lebensmittel liegt. Ein flüssiger Wärmeträger, wie ein Würzmittel, Dampf, heißes oder kaltes Wasser wird über eine Kreislaufleitung, die einen Wärmetauscher enthält, aus dem Ofen abgezogen und in diesen eingeführt. Es wird keine Mischung aus einer festen und einer flüssigen Phase behandelt, die gemeinsam aus dem Behälter abgezogen wird.

Der Erfindung liegt die Aufgabe zugrunde, eine Vorrichtung zum Temperieren einer Mischung aus einer festen und einer Flüssijen Phase produktchonender auszugestalten.

Die Aufgabe wird durch die im Anspruch 1 angegebenen Merkmale gelöst.

Durch die erfindungsgemäße Ausgestaltung wird eine wesentlich produktschonendere Abtrennung der oder eines großen Teils der flüssigen Phase erreicht, die dann problemlos auf die gewünschte Temperatur gebracht und wieder rückgeführt wird, ohne dass es dazu einer mechanischen Belastung der festen Phase durch das im Stand der Technik verwendete Rührwerk bedarf.

Die Barriere wird gemäß der Art und der Konsistenz der festen Phase ausgewählt und ist im einfachsten Fall als Sieb ausgebildet.

Um einen ausreichenden Abzugsraum für die flüssige Phase zu schaffen und aufrechtzuerhalten, ist die Barriere bevorzugt als Innenbehälter ausgebildet und mit Wandabstand zum (Außen- )Behälter angeordnet.

Die Einmündung der temperierten flüssigen Phase in den Behälter erfolgt von unten und in denjenigen Bereich des Behälters, indem sich (auch) feste Phase befindet. Auf diese Weise wird eine schnelle und innige Vermischung erreicht, so dass sich die Temperatur im Behälter sehr schnell homogenisiert.

Der Temperaturangleich im Inneren des Behälters kann noch weiter verbessert werden, wenn die Einleitung der temperierten flüssigen Phase über eine Düse und somit mit erhöhter Geschwindigkeit, erfolgt.

Erfolgt die Einmündung von unten nach oben, so wird die Homogenisierung der Temperatur weiter verbessert und beschleunigt.

Bevorzugt kann der erfindungsgemäße Behälter auch verwendet werden, um schädliche Gase, wie z.B. Luftsauerstoff, aus der sich im Behälter befindlichen Mischung zu entfernen, wenn eine Entgasungseinrichtung vorgesehen ist.

Eine Einrichtung zum Erzeugen eines Überdrucks im Behälter erlaubt das Entleeren des Behälters ohne die Verwendung einer Pumpe, was die feste Phase von einer weiteren mechanischen Belastung befreit.

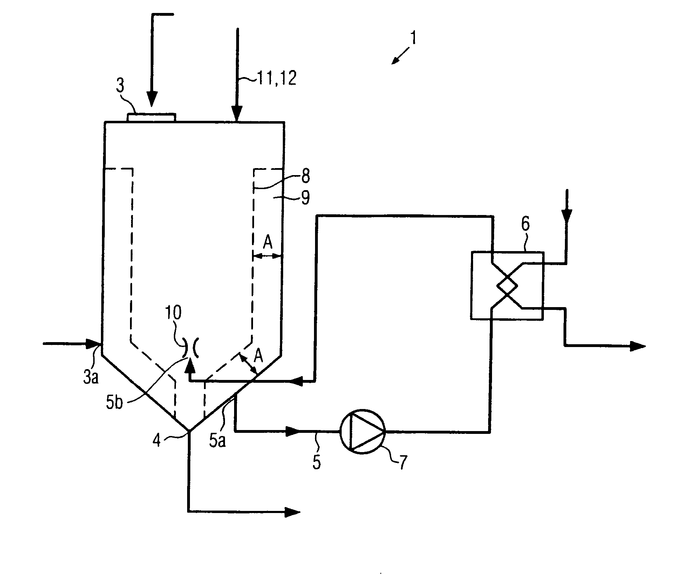

Ein Ausführungsbeispiel der Erfindung wird nachfolgend anhand der einzigen Zeichnung, der Fig. 1, näher erläutert.

Fig. 1 zeigt eine erfindungsgemäße Vorrichtung 1, die im dargestellten Ausführungsbeispiel zum Erhitzen einer Mischung aus einer festen Phase in Form von Fruchtpartikeln und einer flüssigen Phase in Form von Fruchtsaft oder anderen Flüssigkeiten ausgebildet ist. Die erfindungsgemäße Vorrichtung kann jedoch auch zum Kühlen der genannten Mischung oder zum Temperieren anderer, sorgfältig zu behandelnder Mischungen eingesetzt werden.

Die Mischung kann beispielsweise Fruchtpartikel in Form von Stücken und/oder Fasern und/oder Zellen enthalten; die Flüssigkeiten in Form von Saft, Tee, Zuckerwasser oder dgl. vorliegen.

Die Vorrichtung 1 enthält einen Behälter 2, dem über eine Befüllöffnung 3 im oberen Bereich Bestandteile der Mischung eingegeben werden und der im tiefsten Punkt einen Abzug 4 enthält, durch den die temperierte Mischung abgezogen wird.

Der Behälter 2 ist über eine Kreislaufleitung 5 mit einem Wärmetauscher 6 verbunden, der je nach dem zu erhitzenden Produkt ausgewählt wird und bevorzugt ein Plattenwärmetauscher ist. In die Kreislaufleitung 5 ist weiterhin eine Pumpe 7 eingeschaltet. Die Kreislaufleitung 5 verlässt den Behälter 2 über eine Ausmündung 5a und gelangt wieder in den Behälter über eine Einmündung 5b.

Die Ausmündung 5a der Kreislaufleitung 5 ist vom Inneren des Behälters 2 durch eine Barriere 8 getrennt, die so ausgebildet ist, dass allein oder überwiegend die flüssige Phase in die Kreislaufleitung 5 und somit in den Wärmetauscher 6 und die Pumpe 7 gelangt. Auf diese Weise wird sichergestellt, dass die Bestandteile der festen Phase nicht mechanisch oder thermisch übermäßig belastet werden.

Die Barriere 8 ist in ihrer Art an die zurückzuhaltende feste Phase, wie beispielsweise deren Partikelgröße und/oder deren Konsistenz und/oder deren Abmessungsverteilung (Zellen, Fasern oder Stücke) angepasst, so dass eine bestmögliche Rückhaltewirkung erreicht werden kann. Im einfachsten Fall, der in der Mehrzahl der Fälle ausreichend ist, ist die Barriere 8 als Sieb mit entsprechender Lochgröße ausgebildet. Die Barriere 8 kann jedoch auch ein Filtermaterial oder eine Membran sein. Die Barriere 8 ist bevorzugt mechanisch steif, oder mechanisch steif aufgespannt und wird in einem ausreichenden Abstand A zur Ausmündung 5a gehalten, der einem Verstopfen entgegenwirkt. Bevorzugt ist die Barriere 8 als Innenbehälter ausgebildet, der koaxial zum (Außen-)Behälter verläuft und zu diesem allseitig den Abstand A einhält, so dass sich zwischen Barriere 8 und Behälter 2 ein Sammelraum 9 für die flüssige Phase ausbildet. Bevorzugt überspannt die Barriere 8, unter Auslass der Einfüllöffnung 3 und des Abzugs 4 den gesamten von der Mischung eingenommenen Bereich des Behälters 2 bevorzugt zumindest bis zur vorgesehenen maximalen Füllstandshöhe.

Die Ausmündung 5a der Kreislaufleitung 5 liegt im Sammelraum 9 und befindet sich möglichst nahe des Abzugs 4, so dass die flüssige Phase auch abgezogen werden kann, wenn der Füllstand im Behälter 2 niedrig ist.

Die Einmündung 5b der Kreislaufleitung 5 in den Behälter 2 liegt außerhalb des Sammelraums 9 in demjenigen Bereich, in dem sich die ausreparierte feste Phase befindet. Die Einmündung 5b weist nach oben und ist bevorzugt mit einer Düse 10 versehen, durch die die temperierte flüssige Phase aus dem Wärmetauscher 6 in die von der Barriere 8 zurückgehaltene feste Phase eingespritzt wird. Durch die Einleitung im unteren Bereich des Behälters 2, knapp oberhalb des Abzugs 4 und im Wesentlichen mittig im Behälter 2 wird auch eine Blasenbildung bzw. ein Aufschäumen durch das Einspritzen vermieden. Auch wird dadurch eine gute Wärmeverteilung erreicht und der Wärmeübergang zwischen der erwärmten (gekühlten) flüssigen Phase bei ihrem Weg nach oben auf die feste Phase verbessert.

Der Behälter 2 kann weiterhin mit einer Entgasungseinrichtung 11 und/oder mit einer Einrichtung 12 zum Erzeugen eines Überdrucks im Behälter 2 versehen sein. Zum Entgasen, insbesondere zur Entfernung von gelöstem Sauerstoff aus der Mischung/flüssigen Phase kann durch die Entgasungseinrichtung 11 das Innere des Behälters während oder außerhalb des Temperierprozesses unter Unterdruck gesetzt werden.

Zum Erzeugen eines Überdrucks, um beispielsweise den Behälter 2 über den Abzug 4 auf möglichst schonende Weise zu entleeren, kann der Behälter 2 über die Einrichtung 12 unter Überdruck gesetzt werden, so dass der Behälterinhalt durch den Abzug 4 gedrückt wird.

Die beiden Einrichtungen 11, 12 greifen bevorzugt im oberen Bereich des Behälters 2, oberhalb der maximalen Füllstandshöhe, an.

Obwohl der oben beschriebene, diskontinuierliche Prozess (Batchprozess) bevorzugt ist, kann der Behälter ohne weiteres auch für einen kontinuierlichen Betrieb ausgelegt werden.

In der Praxis werden für einen effektiven Betrieb bevorzugt mehrere der oben beschriebenen Vorrichtungen 1 parallel nebeneinandergeschaltet und beispielsweise mit einer gemeinsamen Zufuhr der Rohstoffe und einer mit allen Abzügen verbundenen Sammelleitung zum Abführen der temperierten Mischung versehen. Weiterhin können geeignete Reinigungseinrichtungen und Reinigungsleitungen für eine Reinigung bei Betriebsende oder während des laufenden Betriebes vorgesehen sein.

In Abwandlung des beschriebenen und gezeichneten Ausführungsbeispiels kann die erfindungsgemäße Vorrichtung auch für andere Fest/Flüssig-Mischprodukte eingesetzt werden, die eine besonders sorgsame Behandlung der festen Phase erfordern. Die Vorrichtung kann sowohl zum Erhitzen als auch zum Kühlen eingesetzt werden. Weiterhin können zusätzliche Einfüllöffnungen oder Einfüllvorrichtungen vorgesehen sein, um beispielsweise Pulver oder andere Produkte, gegebenenfalls auch exakt dosiert, zugegeben werden können.

## Patentansprüche

1. Vorrichtung (1) zum Temperieren einer Mischung aus einer festen und einer flüssigen Phase, insbesondere einer Fruchtpartikel enthaltenden Flüssigkeit, mit einem Behälter (2), der eine Befüllöffnung (3) im oberen Bereich zum Eingeben der Bestandteile der Mischung und einen Abzug (4) am tiefsten Punkt zum Abziehen der temperierten Mischung aufweist, und der mit einer Kreislaufleitung (5) mit einem Wärmetauscher (6) verbunden ist, wobei die Kreislaufleitung (5) mit einer Ein- und einer Ausmündung (5a, 5b) in den Behälter (2) mündet, und wobei im Behälter (2) eine die Ausmündung (5a) der Kreislaufleitung (5) gegen die feste Phase sperrende Barriere (8) angeordnet ist.

2. Vorrichtung nach Anspruch 1, **dadurch gekennzeichnet, dass** die Barriere (8) als Sieb ausgebildet ist.

3. Vorrichtung nach Anspruch 1 oder 2, **dadurch gekennzeichnet, dass** die Barriere (8) mit einem Wandabstand (A) zum Behälter (2) angeordnet ist.

4. Vorrichtung nach einem der Ansprüche 1 bis 3, **dadurch gekennzeichnet, dass** die Barriere (8) als Innenbehälter ausgebildet ist.

5. Vorrichtung nach einem der Ansprüche 1 bis 4, **dadurch gekennzeichnet, dass** die Einmündung (5b) im unteren Bereich des Behälters (2) in der festen Phase angeordnet ist.

6. Vorrichtung nach einem der Ansprüche 1 bis 5, **dadurch gekennzeichnet, dass** die Einmündung (5b) der Kreislaufleitung (5) eine Düse (10) enthält.

7. Vorrichtung nach einem der Ansprüche 1 bis 6, **dadurch gekennzeichnet, dass** die Einmündung (5b) nach oben gerichtet ist.

8. Vorrichtung nach einem der Ansprüche 1 bis 7, **dadurch gekennzeichnet, dass** eine Entgasungseinrichtung (11) am Behälter (2) vorgesehen ist.

9. Vorrichtung nach einem der Ansprüche 1 bis 7, **dadurch gekennzeichnet, dass** eine Einrichtung (12) zum Erzeugen eines Überdrucks im Behälter (2) vorgesehen ist.

## Claims

1. Device (1) for tempering a mixture consisting of a solid and a liquid phase, particularly a liquid containing fruit particles, having a container (2) which has a filling opening (3) in the upper area for feeding in the components of the mixture and an extraction point (4) at the deepest point for drawing off the tempered mixture and which container (2) is connected to a heat exchanger (6) via a circulation line (5), wherein the circulation line (5) opens into the container (2) with an entry and an exit point (5a, 5b), and wherein a barrier (8) which blocks the exit point (5a) of the circulation line (5) from the solid phase is arranged in the container (2).

2. Device according to Claim 1, **characterised in that** the barrier (8) is formed as a sieve.

3. Device according to Claim 1 or 2, **characterised in that** the barrier (8) is arranged at a distance (A) to the wall of the container (2).

4. Device according to any one of Claims 1 to 3, **characterised in that** the barrier (8) is formed as an inner container.

5. Device according to any one of Claims 1 to 4, **characterised in that** the entry point (5b) is arranged in the lower area of the container (2) in the solid phase.

6. Device according to any one of Claims 1 to 5, **characterised in that** the entry point (5b) of the circulation line (5) contains a nozzle (10).

7. Device according to any one of Claims 1 to 6, **characterised in that** the entry point (5b) points upwards.

8. Device according to any one of Claims 1 to 7, **characterised in that** a degassing device (11) is provided at the container (2).

9. Device according to any one of Claims 1 to 7, **characterised in that** a device (12) for creating positive pressure in the container (2) is provided.

## Revendications

1. Dispositif (1) pour tempérer un mélange composé d'une phase solide et d'une phase liquide, en particulier un liquide contenant des particules de fruits, avec un récipient (2) qui présente une ouverture de remplissage (3), dans sa zone supérieure, pour introduire les composants du mélange, et un dispositif d'extraction (4), au niveau de son point le plus profond, pour extraire le mélange tempéré, et qui est relié par une conduite de circulation (5) à un échangeur de chaleur (6), étant précisé que la conduite de circulation (5) débouche avec une entrée et une sortie (5a, 5b) dans le récipient (2), et qu'une barrière (8) qui empêche la phase solide d'entrer dans la sortie (5a) de la conduite de circulation (5) est disposée dans le récipient (2).

2. Dispositif selon la revendication 1, **caractérisé en ce que** la barrière (8) est conçue comme un tamis.

3. Dispositif selon la revendication 1 ou 2, **caractérisé en ce que** la barrière (8) est disposée à une distance (A) de la paroi du récipient (2).

4. Dispositif selon l'une des revendications 1 à 3, **caractérisé en ce que** la barrière (8) est conçue comme un récipient intérieur.

5. Dispositif selon l'une des revendications 1 à 4, **caractérisé en ce que** l'entrée (5b) est disposée dans la zone inférieure du récipient (2), dans la phase solide.

6. Dispositif selon l'une des revendications 1 à 5, **caractérisé en ce que** l'entrée (5b) de la conduite de circulation (5) contient un injecteur (10).

7. Dispositif selon l'une des revendication 1 à 6, **caractérisé en ce que** l'entrée (5b) est dirigée vers le haut.

8. Dispositif selon l'une des revendications 1 à 7, **caractérisé en ce qu'**un dispositif de dégazage (11) est prévu sur le récipient (2).

9. Dispositif selon l'une des revendications 1 à 7, **caractérisé en ce qu'**il est prévu un dispositif (12) pour produire une surpression dans le récipient (2).
